# EUROPEAN PATENT APPLICATION

(11) **EP 3 855 132 A1**
(43) Date of publication of application: **28.07.2021**
(21) Application number: 21152512.6
(22) Date of filing: 20.01.2021
(51) Int. Cl.: G01F 1/32

(54) **FLUID SENSING DEVICE**

(30) Priority: 21.01.2020 JP 2020007349; 22.07.2020 JP 2020125714
(71) Applicant: HOSIDEN CORPORATION, Yao-shi, Osaka 581-0071 (JP)
(72) Inventor: TSUBOTA, Shuhei, Yao-shi, Osaka 581-0071 (JP); NIHO, Hiroki, Yao-shi, Osaka 581-0071 (JP); TANAKA, Akihiro, Yao-shi, Osaka 581-0071 (JP); HANAI, Tadashi, Yao-shi, Osaka 581-0071 (JP)
(74) Representative: Gill Jennings & Every LLP

(57) **Abstract**

The invention provides a fluid sensing device having a structure in which a sensitive part is easy to become distorted by fluid. A fluid sensing device S includes a sensitive part 100 with a flexible portion 110, a first obstacle 130a, and a first sensor 200a. The flexible portion 110 extends in the Z-Z' direction. The first obstacle 130a extends in the Z-Z' direction, has a dimension in the Y-Y' direction that is smaller than that of the flexible portion 110, and is located in spaced relation to, and on an upstream side relative to, the flexible portion 110. A collision of the fluid with the first obstacle 130 generates vortexes in the fluid on a downstream side of the first obstacle 130a, and the vortexes collide with the flexible portion 110 so as to distort at least part of the flexible portion 110. The first sensor 200a includes at least one sensing part configured to detect the distortion of the at least part of the flexible portion 110 as a flow of the fluid.

## Description

### TECHNICAL FIELD

The present invention relates to fluid sensing devices.

### BACKGROUND ART

Japanese Unexamined Patent Application Publication No. 56-103322 A discloses a conventional fluid sensing device. The device includes a front obstacle, first and second rear obstacles (sensitive parts), and first and second pressure sensors. The front obstacle extends in a second direction perpendicular to a first direction that corresponds to a flow direction of fluid. The first and second rear obstacles extend in the second direction, are located with a clearance from the front obstacle in the first direction, and are arranged in spaced relation to each other in a third direction orthogonal to the first and second directions. The distance in the third direction from an end in the third direction of the first rear obstacle to the other end in the third direction of the second rear obstacle is slightly larger than the dimension in the third direction of the front obstacle.

When fluid collides with the front obstacle, the flow of the fluid is split into two flows, namely first and second flows. The first and second flows alternately pass on the right and left sides, respectively, of the front obstacle to respectively generate first and second vortexes. In accordance with the alternating passing of the first and second vortexes on the right and left sides of the clearance, the stagnation region on the rear side (downstream side) of the front obstacle is alternately displaced to the right side and the left side. As a result of the alternating displacement of the stagnation area, the second and first flows passing on the left and right sides of the front obstacle are alternately drawn to the right and left sides, respectively, alternately collide with the second and first rear obstacles, respectively, and distort the second and first rear obstacles, respectively.

The first and second pressure sensors are respectively attached to the first and second rear obstacles, respectively, to measure drag forces generated by the distortions of the first and second rear obstacles.

### SUMMARY OF INVENTION

### Technical Problem

The above device is configured such that the second and first rear obstacles become distorted when collided alternately by the second and first flows that are not generating vortexes. As such, the second and first rear obstacles are not easy to become distorted.

The invention provides a fluid sensing device having a structure in which a sensitive part is easy to become distorted by fluid.

### Solution to Problem

The fluid sensing device of an aspect of the invention includes a sensitive part, at least one first obstacle, and a first sensor. The sensitive part includes a flexible portion extending in a second direction substantially orthogonal to a first direction, the first direction being a flow direction of fluid. At least part of the flexible portion is flexible. The at least one first obstacle extends in the second direction and is located in spaced relation to, and on an upstream side of the first direction relative to, the flexible portion. The at least one first obstacle is configured such that a collision of the fluid with the at least one first obstacle generates vortexes in the fluid alternately on one and the other sides in a third direction relative to the at least one first obstacle, so that one or more of the generated vortexes collide with the flexible portion so as to distort the at least part of the flexible portion. The third direction is substantially orthogonal to the first and second directions. The first sensor includes at least one sensing part configured to detect the distortion of the flexible portion as a flow of the fluid.

The fluid sensing device of this aspect is configured such that vortexes, generated in the fluid on one and the other sides in the third direction of the at least one first obstacle, collide with the sensitive part, the at least part of the flexible portion of the sensitive part is easy to get distorted.

The or each first obstacle may have a dimension in the third direction that is smaller than that of the flexible portion. Further, the position in the third direction of the at least one first obstacle relative to the flexible portion may be a position that allows at least one of the vortexes, generated in the fluid alternately on one and the other sides in the third direction of the at least one first obstacle, to flow in the first direction and collide with the flexible portion.

The at least one first obstacle may be provided as a plurality of first obstacles including at least one set of two first obstacles that are adjacent to each other in the third direction with a clearance therebetween. The clearance between the two first obstacles of the or each set may be located on the upstream side of the first direction relative to the flexible portion.

The sensitive part may include a sealed internal space. The at least part of the flexible portion may be configured to become distorted so as to change an air pressure in the internal space. The at least one sensing part of the first sensor may border the internal space or is at least partly located in the internal space, and may be configured to detect changes in the air pressure in the internal space as a flow of the fluid.

The fluid sensing device may include a plurality of obstacles that includes the at least one first obstacle. The obstacles may extend in the second direction and surround the sensitive part at spaced intervals along a circumferential direction of the sensitive part. For example, the obstacles may further include at least one second obstacle. The at least one second obstacle may be located in spaced relation to, and on the downstream side of the first direction, one side in the third direction, or the other side in the third direction, relative to the flexible portion.

The sensitive part may further include a support. The flexible portion of the sensitive part may extend from the support in the second direction. The at least one first obstacle may extend from the support in the second direction.

Where the plurality of obstacles is provided, the obstacles may extend in the second direction from the support.

The fluid sensing device may further include an adapter connectable to a connection target. The connection target may form at least part of a flow channel for flowing the fluid. The support may include a base and a support body. The support body may extend from the base to one side in the second direction. The adapter may be fixed directly or indirectly to the base and may include a through hole extending through the adapter in the second direction. The support body may be located in the through hole of the adapter. At least part of the flexible portion and at least part of the at least one first obstacle may protrude from the through hole of the adapter to the one side in the second direction.

Where the plurality of obstacles is provided, at least part of the flexible portion and at least part of the obstacles may protrude from the through hole of the adapter to the one side in the second direction.

The flexible portion and the at least one first obstacle may be positioned out of contact with the adapter.

Where the plurality of obstacles is provided, the flexible portion and the obstacles may be positioned out of contact with the adapter.

The adapter may include a connecting portion connectable to a connecting pipe of a T-shaped pipe, the T-shaped pipe being the connection target. The at least part of the flexible portion and the at least part of the at least one first obstacle may be located in the T-shaped pipe without contacting the T-shaped pipe with the connecting portion of the adapter connected to the connecting pipe.

Where the plurality of obstacles is provided, the at least part of the flexible portion and the at least part of the obstacles may be located in the T-shaped pipe without contacting the T-shaped pipe with the connecting portion of the adapter connected to the connecting pipe.

The fluid sensing device may further include a second sensor and a controller. The second sensor may include at least one sensing part configured to detect acoustic vibration generated around the sensitive part. The controller may be configured to generate difference data representing differences between characteristic information of the air pressure detected by the at least one sensing part of the first sensor and characteristic information of the acoustic vibration detected by the at least one sensing part of the second sensor.

The controller may include a first Fourier transformer, a second Fourier transformer, and a computing part. The first Fourier transformer may be configured to Fourier transform an electric signal outputted from the at least one sensing part of the first sensor and thereby generate a first frequency spectrum. The second Fourier transformer may be configured to Fourier transform an electric signal outputted from the at least one sensing part of the second sensor and thereby generate a second frequency spectrum. The computing part may be configured to obtain differences between the first frequency spectrum and the second frequency spectrum and thereby generate the difference data.

The controller may further include an emphasizing part. The computing part may be configured to identify, based on the difference data, a frequency band of fluctuation of the air pressure in the internal space. The emphasizing part may be configured to raise a level of the frequency band of fluctuation of the air pressure in the internal space and lower levels of the other frequency bands in the difference data.

### Brief Description of Drawings

Fig. 1A is a front, top, right side perspective view of a fluid sensing device according to a first embodiment of the invention.
Fig. 1B is a front, bottom, right side perspective view of the fluid sensing device of the first embodiment.
Fig. 2A is a cross-sectional view of the fluid sensing device of the first embodiment, taken along line 2A-2A in Fig. 1A.
Fig. 2B is a cross-sectional view of the fluid sensing device of the first embodiment, taken along line 2B-2B in Fig. 1A.
Fig. 2C is a cross-sectional view of the fluid sensing device of the first embodiment, taken along line 2C-2C in Fig. 2A.
Fig. 2D is a cross-sectional view of the fluid sensing device of the first embodiment, taken along line 2D-2D in Fig. 2A.
Fig. 3A is an exploded, front, top, right side perspective view of the fluid sensing device of the first embodiment.
Fig. 3B is an exploded, front, bottom, right side perspective view of the fluid sensing device of the first embodiment.
Fig. 4 is a block diagram of first and second sensors and a controller of the fluid sensing device of the first embodiment.
Fig. 5 is a cross-sectional view, corresponding to Fig. 2B, of the fluid sensing device and a T-shaped pipe of the first embodiment.
Fig. 6 is an example of a waveform diagram representing first and second spectrum signals. The first spectrum signal is obtained by Fourier-transforming an electric signal of a microphone of the first sensor of the sensing device of the first embodiment. The second spectrum signal is obtained by Fourier-transforming an electric signal of a microphone of the second sensor of the sensing device.
Fig. 7 is a waveform diagram of a spectrum signal obtained by subtracting the second spectrum signal from the first spectrum signal of the sensing device of the first embodiment.
Fig. 8 is a cross-sectional view, corresponding to Fig. 2B, of a first variant of the fluid sensing device of the first embodiment.
Fig. 9 is a cross-sectional view corresponding to Fig. 2B of a second variant of the fluid sensing device of the first embodiment.
Fig. 10 is a cross-sectional view corresponding to Fig. 2B of a third variant of the fluid sensing device of the first embodiment.

In the brief description of the drawings above and the description of embodiments which follows, relative spatial terms such as "upper", "lower", "top", "bottom", "left", "right", "front", "rear", etc., are used for the convenience of the skilled reader and refer to the orientation of the fluid sensing devices and their constituent parts as depicted in the drawings. No limitation is intended by use of these terms, either in use of the invention, during its manufacture, shipment, custody, or sale, or during assembly of its constituent parts or when incorporated into or combined with other apparatus.

### DESCRIPTION OF EMBODIMENTS

Various embodiments of the invention, including first and second embodiments and modifications thereof, will now be described. Constituents of the embodiments and the modifications thereof to be described may be combined in any possible manner. Materials, shapes, dimensions, numbers, arrangements, etc. of the constituents of the various aspects of the embodiments and the modifications thereof will be discussed below as examples only and may be modified as long as they achieve similar functions.

### First embodiment

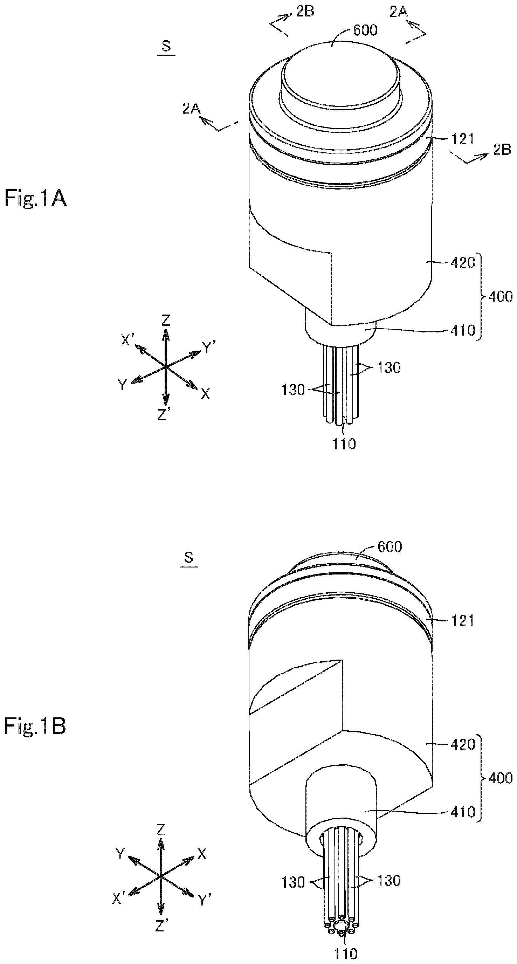

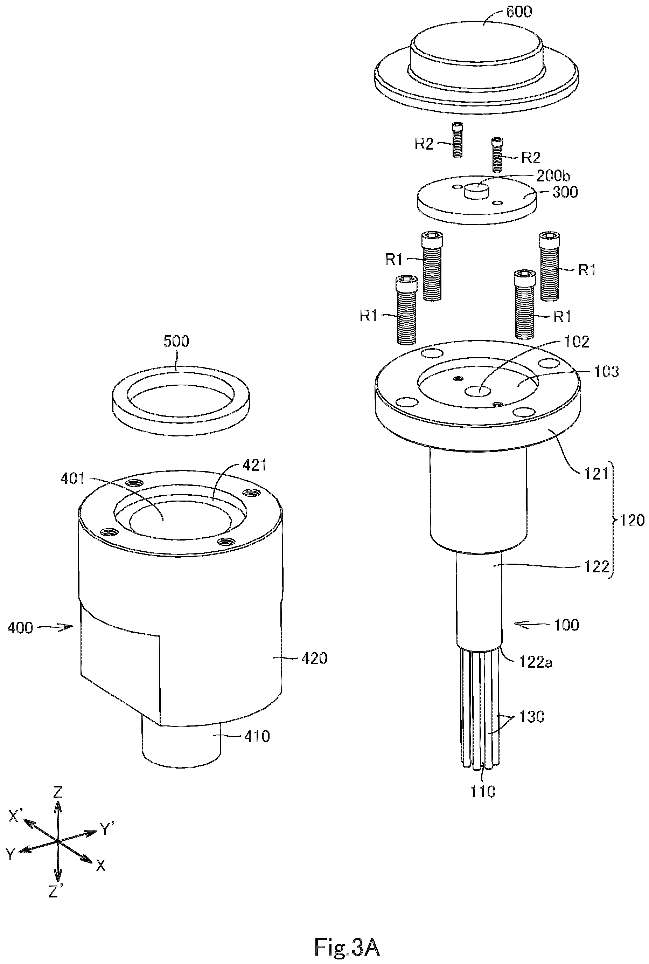

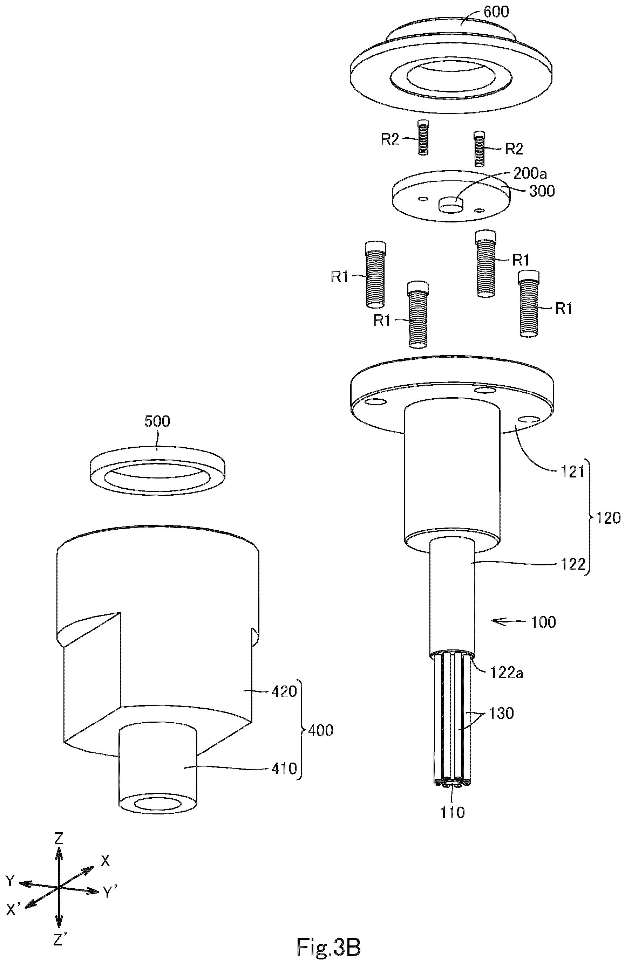

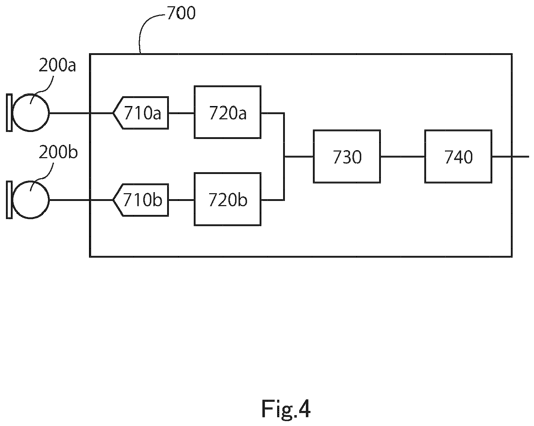

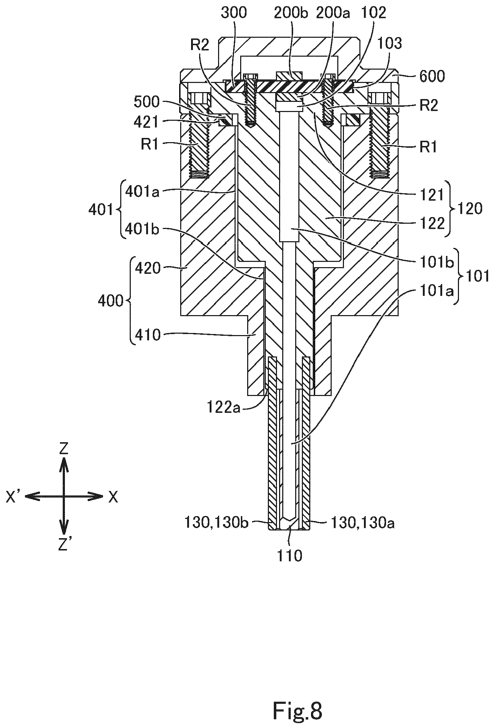

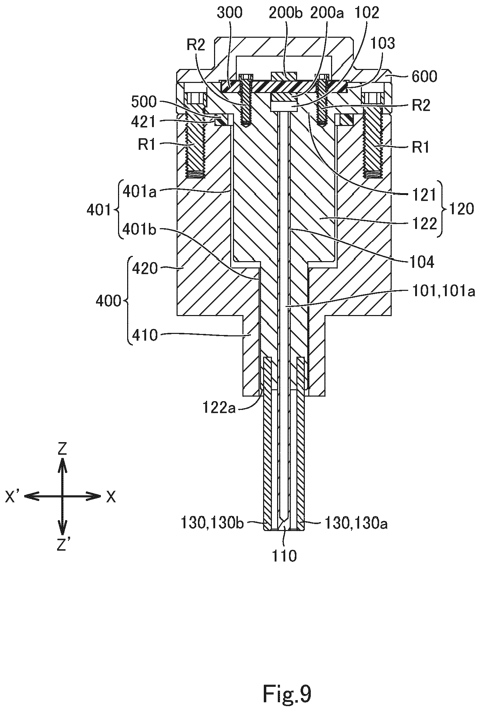

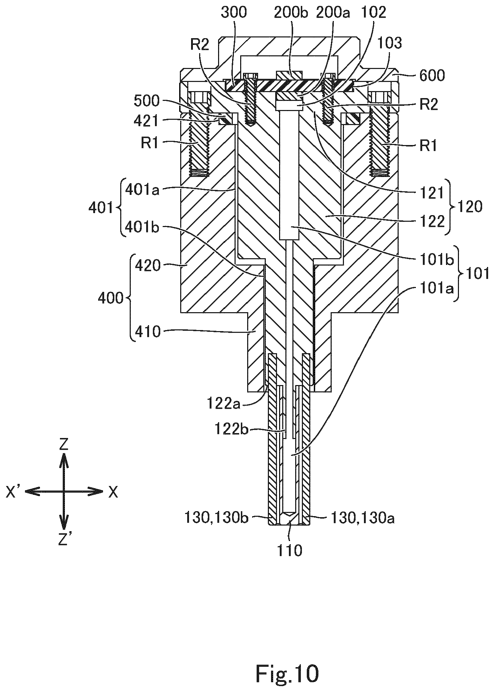

Hereinafter described is a fluid sensing device S (which may be referred to simply as a sensing device S) according to a plurality of embodiments, including a first embodiment and modifications thereof, of the invention, with reference to Figs. 1A to 10. The sensing device S is a sensing device for detecting the flow of fluid (e.g., liquid, gas, or other flowable substance). Figs. 1A to 5 show the sensing device S of the first embodiment. Fig. 8 shows a first variant of the sensing device S of the first embodiment. Fig. 9 shows a second variant of the sensing device S of the first embodiment. Fig. 10 shows a third variant of the sensing device S of the first embodiment. Figs. 1A, 1B, 2B to 2D, 3A, 3B, 5, and 8 to 10 show an X-X' direction. The X-X' direction includes an X direction and an X' direction (first direction). The X' direction is the flow direction of the fluid. The X direction is the upstream direction of the flow of the fluid, and the X' direction is the downstream direction of the flow of the fluid. Figs. 1A to 2B, 3A, 3B, 5, and 8 to 10 show a Z-Z' direction (second direction). The Z-Z' direction is substantially orthogonal to the X-X' direction, and includes a Z' direction (one side in the second direction) and a Z direction (the other side in the second direction). Figs. 1A to 2A and 2C to 3B show a Y-Y' direction (third direction). The Y-Y' direction is substantially orthogonal to the X-X' and Z-Z' directions, and includes a Y direction (one side in the third direction) and a Y' direction (the other side in the third direction).

The sensing device S includes a sensitive part 100. The sensitive part 100 includes a flexible portion 110. The flexible portion 110 is a cylinder or polygonal-section column extending in the Z-Z' direction, at least part of which is made of a flexible material, such as an elastic material (e.g., rubber), a metal, a synthetic resin, or the like material. Where part of the flexible portion 110 is made of a flexible material, the remaining part may be made of a material having a higher rigidity than the part of the flexible portion 110. At least part of the flexible portion 110 may be bent or curved in advance. Further, the sensitive part 100 has a sealed internal space 101. The internal space 101 is filled with air or other gas. The sensitive part 100 is configured such that the sensitive part 100 is pressed by fluid and the at least part of the flexible portion 110 (part or all of the flexible portion 110) becomes distorted so as to change air pressure in the internal space 101(i.e., vibrate the gas in the internal space 101). The pressures applied onto the flexible portion 110 of the sensitive part 100 are thus converted into changes in air pressure in the internal space 101 (vibration of gas in the internal space 101). Where the at least part of the flexible portion 110 becomes distorted to a larger degree, air pressure in the internal space 101 changes to a larger degree, and where the at least part of the flexible portion 110 becomes distorted to a lesser degree, air pressure in the internal space 101 changes to a lesser degree. It should be noted that the Z-Z' direction corresponds to the longitudinal direction of the flexible portion 110.

The sensing device S further includes at least one first obstacle 130a. The at least one first obstacle 130a is a cylinder or polygonal-section column extending in the Z-Z' direction and may be made of e.g., metal, synthetic resin, or the like. The at least one first obstacle 130a is configured to generate vortexes (Kármán vortexes) in fluid colliding with the at least one first obstacle 130a. The at least one first obstacle 130a is arranged in spaced relation to, and on the X-direction side (upstream side of the first direction) relative to, the flexible portion 110. The at least one first obstacle 130a may be provided as a plurality of first obstacles 130 arranged in spaced relation to each other in the Y-Y' direction. The plurality of first obstacles 130 is arranged in spaced relation to, and on the X-direction side (upstream side of the first direction) relative to, the flexible portion 110.

When fluid flowing in the X' direction collides with one or more first obstacles 130a, the collision generates vortexes (Kármán vortexes) in the fluid alternately on the Y- and Y'-direction sides of the one or more first obstacles 130a. When one or more of the generated vortexes flows in the X' direction and collides with the flexible portion 110 (when the flexible portion 110 is pressed by the vortexes of the fluid), the flexible portion 110 becomes distorted so as to change the air pressure in the internal space 101.

Accordingly, the distance in the X-X' direction from the one or more first obstacles 130a to the flexible portion 110 is set to a distance that allows the vortex, generated in the fluid due to the collision of the fluid with the with one or more first obstacles 130a, to collide with the flexible portion 110. Further, the position in the Y-Y' direction of the one or more first obstacles 130a relative to the flexible portion 110 may be set to a position that allows at least one of the vortexes, generated in the fluid alternately on the Y- and Y'-direction sides of the one or more first obstacles 130a, to flow in the X' direction and collide with the flexible portion 110. In other words, the position of in the Y-Y' direction of the one or more first obstacles 130a relative to the flexible portion 110 may be set to a position where part in the Y-Y' direction of the flexible portion 110 is visible on at least one of the Y- and Y'-direction sides of the one or more first obstacles 130a when the one or more first obstacles 130a and the flexible portion 110 are seen from the X-direction side (upstream side of the first direction) relative to the center axis of the flexible portion 110. The or each first obstacle 130a may or may not have a dimension in the Y-Y' direction that is smaller than that of the flexible portion 110. For example, the dimension in the Y-Y' direction of the or each first obstacle 130a may be up to two third, up to one half, or up to than one third, of the dimension in the Y-Y' direction of the flexible portion 110.

Where a plurality of first obstacles 130a is provided, the first obstacles 130a include at least one set of two first obstacles 130a that are adjacent to each other in the Y-Y' direction. Between the adjacent two first obstacles 130a of the or each set, a clearance is provided. The clearance is smaller than the dimension in the Y-Y' direction of the flexible portion 110 and is located on the X-direction side (upstream side of the first direction) relative to the flexible portion 110. In other words, the clearance between the adjacent two first obstacles 130a of the or each set is located at a position that allows part in the Y-Y' direction of the flexible portion 110 to be exposed through the clearance when the two adjacent first obstacles 130a and the flexible portion 110 are seen from the X-direction side (upstream side of the first direction) relative to the central axis of the flexible portion 110. The positional relationship allows fluid flowing in the X' direction to collide with the two adjacent first obstacles 130a of the or each set and pass through the clearance between the two obstacles 130a so as to facilitate the generation of vortexes (Kármán vortexes).

The sensing device S may include a plurality of obstacles 130. The obstacles 130 include the at least one first obstacle 130a described above and a plurality of second obstacles 130b. The obstacles 130 have the same configuration as that of the at least one first obstacle 130a, except that the obstacles 130 surround the flexible portion 110 of the sensitive part 100, at spaced intervals along a circumferential direction of the sensitive part 100. The second obstacles 130b have the same configuration as that of the at least one first obstacle 130a, except that the second obstacles 130b are arranged on the X'-direction side (downstream side of the first direction) and the Y- and Y'-direction sides relative to the flexible portion 110. The second obstacles 130b are also configured such that collision of fluid with the second obstacles 130b generates vortexes (Kármán vortexes) in the fluid alternately on the Y- and Y'-direction sides of the second obstacles 130b. All of the second obstacles 130b can all be omitted. Alternatively, one or two of the following sets may be omitted: a set of one or more second obstacles 130b located on the X'-direction side (downstream side of the first direction) relative to the flexible portion 110, a set of one or more second obstacles 130b located on the Y-direction side, and a set of one or more second obstacles 130b located on the Y'-direction side.

The sensing device S further includes a sensor 200a (first sensor). The sensor 200a includes at least one microphone (at least one sensing part). The or each microphone may be an electret condenser microphone, a MEMS microphone, or a dynamic microphone, for example. The at least one microphone is configured to collect sound in a frequency band corresponding to the frequencies of changes in air pressure in the internal space 101 (the frequencies of vibration of gas in the internal space 101). The smaller the or each microphone is in outer size, the higher the frequency band of sound to be collected by the or each microphone is. In view of this, where the gas in the internal space 101 vibrates in a higher frequency band, the at least one microphone may preferably be smaller in outer size. For example, the or each microphone having an outer diameter of 4ϕ can collect sound up to about 10 kHz.

The or each microphone is configured to detect changes in air pressure in the internal space 101. For example, the or each microphone may include a diaphragm (not shown) configured to vibrate in response to changes in air pressure in the internal space 101, and vibration of the diaphragm causes changes in an electric signal (for example, voltage) of the microphone. Where air pressure in the internal space 101 changes to a larger degree, the waveform of the electric signal of the or each microphone has a larger amplitude. Where air pressure in the internal space 101 changes to a lesser degree, the waveform of the electric signal of the or each microphone has a smaller amplitude.

The sensor 200a may further include a housing and a plurality of output members. The housing 210a is provided with at least one sound hole communicating with the internal space 101. The output members are terminals, electrodes, lead wires, or the like for outputting electric signals of the at least one microphone to the outside of the sensor 200a.

Where the sensor 200a includes a single microphone, the housing may be the housing of the microphone, the at least one sound hole may be the at least one sound hole of the microphone, and the output members may be the output members of the microphone. The sensor 200a may include a plurality of microphones that are unitized. In this case, the housing may be the housing of the unit, the at least one sound hole may be the at least one sound hole of the microphones or of the unit, and the output members may be the output members of the microphones or of the unit.

The sensing device S may further include a sensor 200b (second sensor). The sensor 200b includes at least one microphone (at least one sensing part). The or each microphone may be an electret condenser microphone, a MEMS microphone, or a dynamic microphone, for example. The at least one microphone is configured to collect sound in a frequency band corresponding to the frequencies of acoustic vibration (noise) generated around the sensitive part 100.

The or each microphone is configured to detect acoustic vibration generated around the sensitive part 100. For example, the or each microphone may include a diaphragm (not shown) configured to vibrate in response to acoustic vibration generated around the sensitive part 100, and vibration of the diaphragm causes changes in an electric signal (for example, voltage) of the microphone.

The sensor 200b may further include a housing and a plurality of output members. The housing is provided with at least one sound hole (not shown), and the sensor 200b may be arranged such that the at least one sound hole faces an area around the sensitive part 100. For example, the sensor 200b may be arranged such that the at least one sound hole thereof faces in a direction opposite to the direction in which the at least one sound hole of the sensor 200a faces. Where the at least one sound hole of the sensor 200a faces in the Z' direction, the sensor 200b may be arranged such that the at least one sound hole of the sensor 200b faces in the Z direction. The output members of the sensor 200b are terminals, electrodes, lead wires, or the like for outputting a signal from the at least one microphone to the outside of the sensor 200b.

Where the sensor 200b includes a single microphone, the housing of the sensor 200b may be the housing of the microphone, and the at least one sound hole of the sensor 200b may be the at least one sound hole of the microphone, and the output members of the sensor 200b may be the output members of the microphone. The sensor 200b may include a plurality of microphones that are unitized. In this case, the housing of the sensor 200b may be the housing of the unit, at least one sound hole of the sensor 200b may be the sound hole of the microphone or of the unit, and the output members of the sensor 200b may be the output members of the microphones or of the unit.

The sensing device S may further include a substrate 300. The substrate 300 has a first face on the Z'-direction side and a second face on the Z-direction side. The sensor 200a is mounted on the first face of the substrate 300, and the output members of the sensor 200a are connected to surface electrodes on the first face of the substrate 300 or to through-hole electrodes in the first face of the substrate 300. The sensor 200b is mounted on the second face of the substrate 900, and the output members of the sensor 200b is connected to surface electrodes on the second face of the substrate 900 or through-hole electrodes in the second face of the substrate 300.

The sensing device S may further include a controller 700. The controller 700 may be a logic circuit mounted on the substrate 300 or may be software to be processed by a logic circuit. The controller 700 is configured to generate difference data representing differences between characteristic information of the air pressure in the internal space 101 detected by at least one sensing part of the sensor 200a and characteristic information of the acoustic vibration around the sensitive part 100 detected by the at least one sensing part of the sensor 200b.

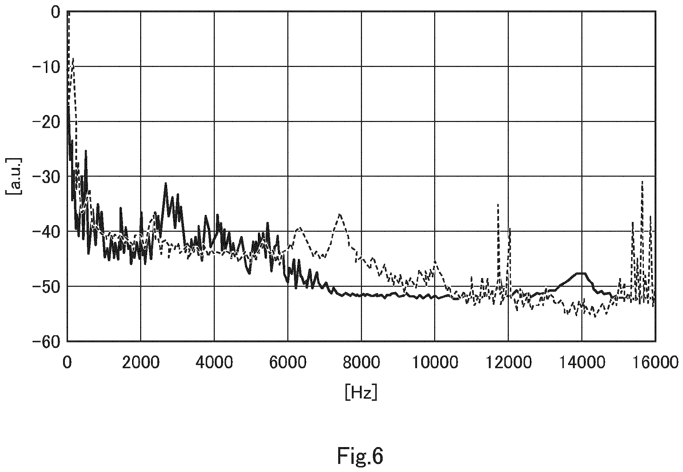

The controller 700 includes, for example, a first analog-to-digital converter (ADC) 710a, a second analog-to-digital converter (ADC) 710b, a first Fourier transformer (FFT) 720a, a second Fourier transformer (FFT) 720b, and a computing part 730. In this case, the first ADC 710a is configured to convert a first electric signal into a digital signal and input the digitized first electric signal into the first Fourier transformer 720a. The first electric signal is a signal outputted from the at least one sensing part of the sensor 200a, e.g., an electric signal from the at least one microphone of the sensor 200a. The first Fourier transformer 720a is configured to Fourier transform (perform a spectral analysis on) the digitized first electric signal to generate a first frequency spectrum (a first spectrum signal for each of a predetermined number of frequency bands) (see Fig. 6). The first frequency spectrum represents the characteristic information of the air pressure in the internal space 101. The second ADC 710b is configured to convert a second electric signal into a digital signal and input the digitized second electric signal into the second Fourier transformer 720b. The second electric signal is a signal outputted from the at least one sensing part of the sensor 200b, e.g., an electric signal from the at least one microphone of the sensor 200b. The second Fourier transformer 720b is configured to Fourier transform (perform a spectral analysis on) the digitized second electric signal to generate a second frequency spectrum (a second spectrum signal for each of a predetermined number of frequency bands) (see Fig. 6). The second frequency spectrum represents the characteristic information of the acoustic vibration around the sensitive part 100. Fig. 6 shows the first spectrum signal as a waveform in a broken line and the second spectrum signal as a waveform in a solid line.

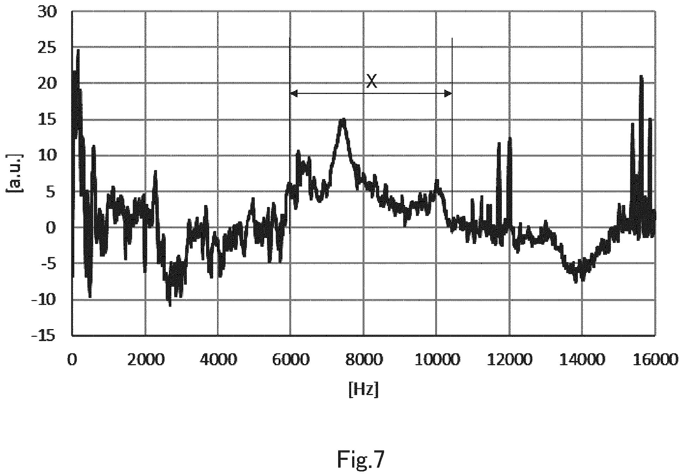

The computing part 730 is configured to generate difference data representing differences between the first frequency spectrum and the second frequency spectrum (difference data between the first spectrum signal and the second spectrum signal for each frequency band). In other words, the computing part 730 is configured to subtract the second frequency spectrum from the first frequency spectrum to generate the difference data (subtract the second spectrum signal from the first spectrum signal for each frequency band to generate a spectrum signal representing the difference for each frequency band) (see Fig. 7). It should be noted that with regard to the waveforms of the first and second spectrum signals shown in Fig. 6 and the waveforms of the difference spectrum signal shown in Fig. 7, these signals have been measured using the sensing device S, with a cover 600 (to be described) removed, of the first embodiment shown in Figs. 1A to 3B.

The computing part 730 may be configured to compare the signal level of the first frequency spectrum with that of the second frequency spectrum (comparing the signal level of the first spectrum signal with that of the second spectrum signal for each frequency band) before generating the difference data. When the computing part 13 determines that the difference between the signal level of the first frequency spectrum and that of the second frequency spectrum exceeds a predetermined threshold (that the difference between the signal level of the first spectrum signal and that of the second spectrum signal for each frequency band exceeds the predetermined threshold), the computing part 13 normalizes the signal levels of the first and second frequency spectrums to the same level (decrease or increase the signal level of one of the first and second frequency spectrums to be the same level as the signal level of the other frequency spectrum) and then generate difference data representing differences between the signal levels of the first and second frequency spectrums that have been normalized to the same level in a manner as described above. The threshold is recorded in a memory (not shown) of the controller 700.

The controller 700 may further include an emphasizing part 740. In this case, the computing part 730 may further be configured to identify a frequency band of fluctuation of the air pressure in the internal space 101, on the basis of the difference data generated in any of the above manners. For example, the computing part 730 may be configured to determine out of the difference data that a frequency band of a differential spectrum signal that is located only in the positive territory (e.g. frequency band "X" indicated in Fig. 7) is identified as a fluctuation frequency band of the air pressure in the internal space 101, and that a frequency band of a differential spectrum signal that is located in both positive and negative territories (e.g. frequency bands other than band "X" indicated in Fig. 7) is identified as a frequency band of fluctuation of the acoustic vibration around the sensitive part 100. The emphasizing part 740 is configured to raise the level of the spectral signal in the frequency band of fluctuation of the air pressure in the internal space 101 identified by the computing part 730, lower the level of the spectrum signal in the frequency band of the acoustic vibration around the sensitive part 100 identified by the computing part 730, and then output the emphasized spectrum signal to the outside of the controller 700(e.g., to an external electronic device).

The controller 700 may further have a configuration for sensing a change in air pressure in the internal space 101 or calculating the amount of change in air pressure in the internal space 101, on the basis of the difference data generated in any of the above manners, or on the basis of the spectrum signal of the identified frequency band of fluctuation of the air pressure in the internal space 101.

The emphasizing part 740 can be omitted. Where the emphasizing part 740 is omitted, the computing part 730 may be configured to output the difference data generated in any of the above manners to the outside of the controller 700 (e.g., to an external electronic device), or may be configured to output the data resenting the identified frequency band of fluctuation of the air pressure in the internal space 101 to the outside of the controller 700 (e.g., to an external electronic device).

The sensor 200b and/or the controller 700 can be omitted. Where the sensor 200b is omitted while the controller 700 is provided, the controller 700 may be configured to sense changes in air pressure in the internal space 101, or alternatively calculate the amount of changes in air pressure in the internal space 101, on the basis of an electric signal of the at least one microphone of the sensor 200a. Where both the controller 700 and the sensor 200b are omitted, the output members of the sensor 200a may be electrically connectable to a controller of the electronic device. Where the controller 700 is omitted while the sensor 200b is provided, the output members of the sensors 200a and 200b may be electrically connectable to a controller of the electronic device.

The substrate 300 can also be omitted. Where the substrate 300 and the sensor 200b are omitted, the output members of the sensor 200a may be electrically connectable to the controller 700 or to a controller of the electronic device. Where the substrate 300 is omitted while the sensor 200b is provided, the output members of the sensors 200a and 200b may be electrically connectable to the controller 700 or to a controller of the electronic device.

The sensitive part 100 may further include an opening 102. The opening 102 communicates with the internal space 101 and opens to the outside of the sensitive part 100. The direction in which the opening 102 opens will be referred to as an opening direction. The opening direction may be, but is not required to be, the Z direction as shown in Figs. 1A to 3B, 5 and 8 to 10. The sensor 200a, or alternatively a closing part, may fit in at least part of the opening 102 from the opening-direction side and thereby close the opening 102. In this case, in a cross section in a direction orthogonal to the opening direction, the sensor 200a or the closing part may have an outer shape corresponding to the shape of the at least part of the opening 102, and the sensor 200a or the closing part may have outer dimensions that are substantially the same as, or slightly larger than, the dimensions of the at least part of the opening 102. Alternatively, the sensor 200a or the closing part may not fit in the opening 102 but be fixed to an outer face of the sensitive part 100 so as to close the opening 102 from the opening-direction side. In either case, the sensor 200a or the closing part closes the opening 102 and thereby seal the internal space 101. In the embodiment shown in Figs. 1A to 3B, 5 and 8 to 10, the opening 102 opens in the Z direction, and the sensor 200a fits in the portion on the Z'-direction side of the opening 102 from the Z-direction side.

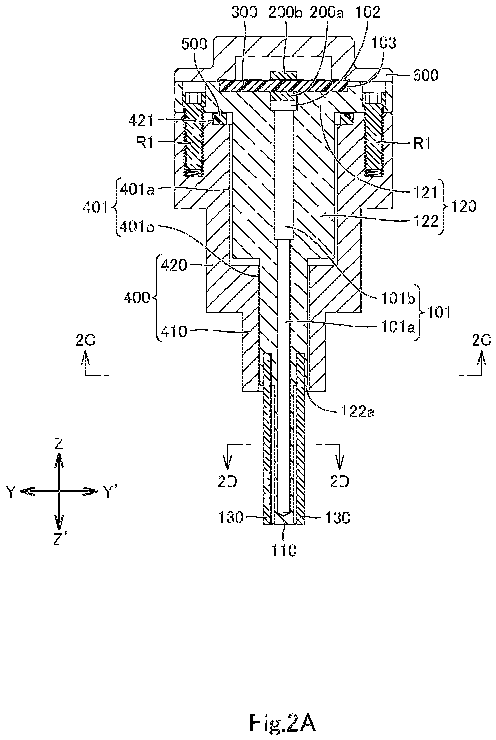

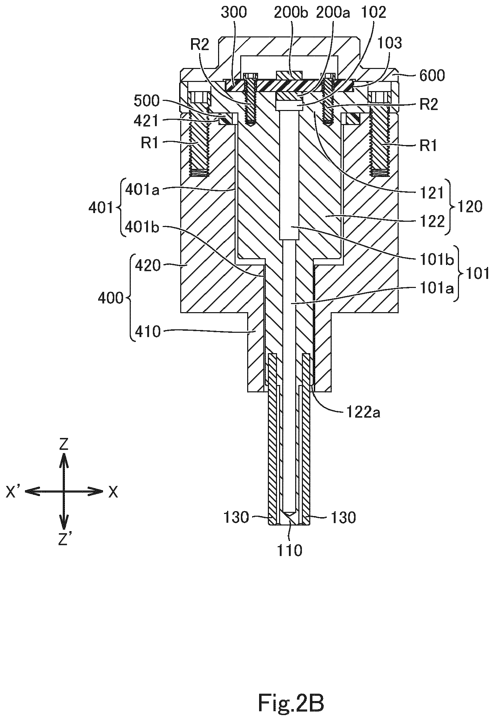

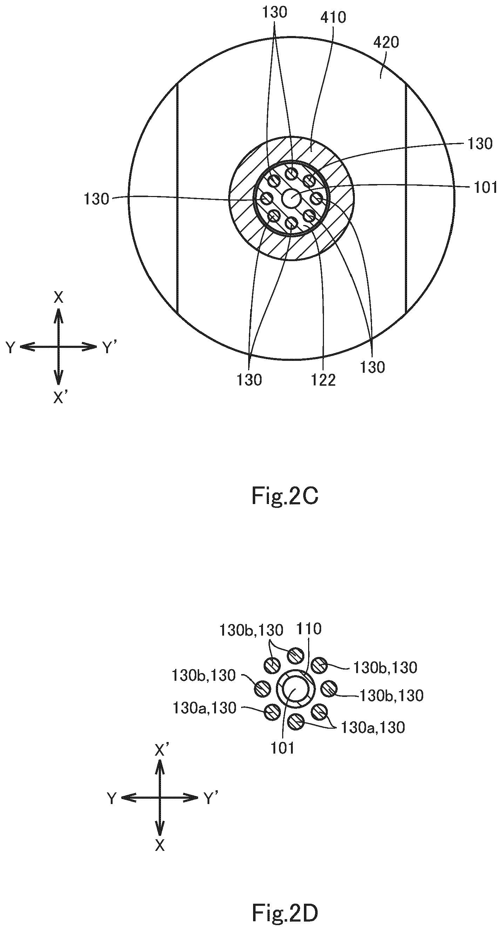

Where the sensor 200a closes the opening 102 (see Figs. 2A to 2B, 4, and 5), the sensor 200a may border the internal space 101 or may be at least partly located in the internal space 101. In this case, the sensor 200a has a closing face to close the opening 102. The closing face includes the at least one sound hole. The closing face may be, but is not required to be, a flat face. The closing face of the sensor 200a may face in the Z' direction as shown in Figs. 1A to 3B, 5 and 8 to 10.

Where the closing part closes the opening 102 (not shown), the sensor 200a may be located in the internal space 101. In this case, the substrate 300 may serve as the closing part, or alternatively the closing part may be a cap made or rubber or synthetic resin. Where the opening 102 is omitted, the sensor 200a may border the internal space 101 or may be located in the internal space 101. In this case, the sensor 200a may be embedded in the sensitive part 100 by insert molding.

The sensitive part 100 may further include a support 120. The support 120 may be made of a metal, synthetic resin, or other material that has substantially the same rigidity as, or a higher rigidity than, the flexible portion 110.

The support 120 is only required to support the flexible portion 110. The support 120 may include a base 121 and a support body 122, for example. The flexible portion 110 is joined to the support body 122 in the Z-Z' direction, and extends from the support body 122 in the Z-Z' direction (i.e., in the Z' direction). Where the substrate 300 is provided, the face on the Z-direction side of the base 121 may be provided with a housing recess 103, which may be located on the Z-direction side relative to, and in communication with, the opening 102. In this case, the sensor 200a borders the internal space 101 or is at least partly located in the internal space 101, and the substrate 300 is placed in the housing recess 103 from the Z-direction side. The housing recess 103 can be omitted. Where the housing recess 103 is omitted, the sensor 200a borders the internal space 101 or is at least partly located in the internal space 101, and the substrate 300 is provided on the face on the Z-direction side of the base 121. Where the substrate 300 is omitted while the sensor 200b is provided, the sensor 200b may be provided on the face on the Z-direction side of the base 121. The substrate 300 may be fixed on the face on the Z-direction side of the base 121 with screws R2, an adhesive, or other means. The support body 122 extends from the base 121 in the Z-Z' direction. In a cross section in the X-X' direction, the support body 122 may, but is not required to, have outer dimensions that are smaller than the outer dimensions of the base 121. The support body 122 may have any shape adapted to support the flexible portion 110. The base 121 can be omitted.

Where the support 120 is provided, the sensitive part 100 may further include one of the following configurations (1) or (2).
(1) The flexible portion 110 of the sensitive part 100 is integrally and contiguously connected to the support body 122 and extends in the Z-Z' direction from the support body 122 (see Figs. 1A to 3B and 5). In this case, the internal space 101 may include a first space 101a and a second space 101b. The first space 101a is provided in the flexible portion 110. The second space 101b may be provided in the support body 122, and the opening 102 may be provided in the support body 122 and the base 121. Alternatively, the second space 101b may be provided in the support body 122 and the base 121, and the opening 102 may be provided in the base 121. The second space 101b is located on the Z-direction side relative to, and in communication with, the first space 101a. The opening 102 is located on the Z-direction side relative to, and in communication with, the second space 101b, and opens to the Z-direction side. The sensor 200a may close the opening 102 in any of the above manners, and the sensor 200a may border the internal space 101 or may be at least partly located in the internal space 101. In any of these cases, the sensor 200a may fit in the opening 102 of the support 120 and thereby be fixed to the support 120, or alternatively the sensor 200a may be fixed to the outer face of the support 120 to close the opening 102. Still alternatively, the closing part may close the opening 102 from the outside of the sensitive part 100, and the sensor 200a may border the internal space 101 or may be at least partly located in the internal space 101.
(2) The flexible portion 110 of the sensitive part 100 may be provided separately from the support 120 and joined to the support body 122 of the support 120 in the Z-Z' direction, and extend in the Z-Z' direction from the support body 122. In this case, the sensitive part 100 may further have any of the following configurations (2-1), (2-2), and (2-3), for example.
   (2-1) The end in the Z direction of the flexible portion 110 is jointed (connected) to the support body 122 by welding, bonding, adhering, or the like means (see Fig. 8). Also in this case, the first space 101a and the second space 101b of the internal space 101 of the sensitive part 100, and the opening 102 of the sensitive part 100, are provided in a similar manner to configuration (1) above. As in configuration (1), the sensor 200a may close the opening 102, and border the internal space 101 or be at least partly located in the internal space 101. Alternatively, as in configuration (1), the closing part may close the opening 102, and the sensor 200a may border the internal space 101 or be at least partly located in the internal space 101.
   (2-2) The portion on the Z-direction side of the flexible portion 110 of the sensitive part 100 fits in a housing hole 104 of the support body 122 and is thereby joined (connected) to the support body 122 (see Fig. 9). The housing hole 104 is provided in the support body 122 and opens in the Z' direction. In this case, the first space 101a of the internal space 101 of the sensitive part 100 is provided in the flexible portion 110; and the opening 102 is provided in the support body 122 and the base 121 and located on the Z-direction side relative to, and in communication with, the housing hole 104. With the portion on the Z-direction side of the flexible portion 110 fitting in the housing hole 104, the opening 102 is located on the Z-direction side relative to, and in communication with, the first space 101a. As in configuration (1), the sensor 200a may close the opening 102, and border the internal space 101 or be at least partly located in the internal space 101. Alternatively, as in configuration (1), the closing part may close the opening 102, and the sensor 200a may border the internal space 101 or be at least partly located in the internal space 101.
   (2-3) The portion on the Z-direction side of the flexible portion 110 of the sensitive part 100 fits over a tubular portion 122b of the support body 122 and is thereby jointed (connected) to the support body 122 (see Fig. 10). The tubular portion 122b is a portion on the Z'-direction side of the support body 122, extends in the Z-Z' direction, and opens in the Z' direction. In this case, the first space 101a of the internal space 101 of the sensitive part 100 is provided in the flexible portion 110; and the second space 101b is provided in the support body 122 and the base 121 and located on the Z-direction side relative to, and in communication with, the first space 101a. The second space 101b forms part of the space inside the tubular portion 122b. The opening 102 is provided in the base 121, is located on the Z-direction side relative to, and in communication with, the second space 101b, and opens to the Z-direction side. As in configuration (1), the sensor 200a may close the opening 102, and border the internal space 101 or be at least partly located in the internal space 101. Alternatively, as in configuration (1), the closing part may close the opening 102, and the sensor 200a may border the internal space 101 or be at least partly located in the internal space 101.

Where the sensitive part 100 has any of the above configurations (1), (2-1), or (2-3), the second space 101b can be omitted. Where the second space 101b is omitted, the opening 102 may be provided in the support body 122 and the base 121 and located on the Z-direction side relative to, and in communication with, the first space 101a. Where the sensitive part 100 has configuration (2-1) or (2-3) and the second space 101b is omitted, the opening 102 may be an opening in the Z-direction side of the flexible portion 110, the sensor 200a supported by the support body 122 may be located in the internal space 101 through the opening 102, and the support body 122 may close the opening 102. In this case, the substrate 300 may be omitted, or alternatively the sensor 200a may not be mounted on the substrate 300 and the output members of the sensor 200a may be electrically connected to the substrate 300. Where the sensitive part 100 has any of the configurations (1), (2-1), (2-2), or (2-3), the second space 101b and the opening 102 can be omitted. Where the second space 101b and the opening 102 are omitted, the sensor 200a may be embedded in the sensitive part 100 by insert molding such as to border the internal space 101 or be partly located in the internal space 101. Where the sensitive part 100 includes the flexible portion 110 only, or where the sensitive part 100 includes the flexible portion 110 but not the support 120, the flexible portion 110 may be provided in the internal space 101 and may be provided further with the opening 102.

Where the at least one first obstacle 130a is provided but the second obstacles 130b are not provided, the support 120 may be configured to support the at least one first obstacle 130a. In this case, the support body 122 of the support 120 includes a peripheral portion 122a surrounding the flexible portion 110. The at least one first obstacle 130a extends in the Z-Z' direction from the peripheral portion 122a of the support 120. The at least one first obstacle 130a may be provided separately from the support body 122 of the support 120. In this case, the peripheral portion 122a of the support body 122 is provided with at least one support hole opening in the Z' direction. The portion the Z-direction side of the or each first obstacle 130a fits in the or a corresponding support hole of the support body 122. The at least one first obstacle 130a may be contiguously connected to the peripheral portion 122a of the support body 122 of the support 120 and integrated with the support body 122. The dimension in the Z-Z' direction from the end in the Z' direction of the or each first obstacle 130a to the peripheral portion 122a may be substantially the same as, smaller than, or larger than, the dimension in the Z-Z' direction from the end in the Z' direction of the flexible portion 110 to the peripheral portion 122a.

Where the plurality of obstacles 130 is provided, the obstacles 130 extend in the Z-Z' direction from the peripheral portion 122a of the support body 122 of the support 120. The obstacles 130 may be provided separately from the support body 122 of the support 120. In this case, the peripheral portion 122a of the support body 122 is formed with a plurality of support holes opening in the Z' direction at spaced intervals along the circumferential direction. The portions on the Z-direction side of the obstacles 130 fit in the corresponding support holes of the support body 122. The obstacles 130 may be contiguously connected to the peripheral portion 122a of the support body 122 of the support 120 at spaced intervals along the circumferential direction, and integrated with the support body 122. The dimension in the Z-Z' direction from the end in the Z' direction of each of the obstacles 130 to the peripheral portion 122a may be substantially the same as, smaller than, or larger than, the dimension in the Z-Z' direction from the end in the Z' direction of the flexible portion 110 to the peripheral portion 122a.

The sensing device S may further include an adapter 400. The adapter 400 is made of metal or synthetic resin. The adapter 400 is provided with a through hole 401 extending through the adapter 400 in the Z-Z' direction.

Where the at least one first obstacle 130a is provided but the second obstacle 130b are not provided, the through hole 401 has a dimension in the Z-Z' direction that is smaller than the sum of the dimension in the Z-Z' direction of the flexible portion 110 and the dimension in the Z-Z' direction of the support body 122, and smaller than the sum of the dimension in the Z-Z' direction of the or each first obstacle 130a and the dimension in the Z-Z' direction of the support body 122. The support body 122, the portion on the Z-direction side of the flexible portion 110, the portion on the Z-direction side of the or each first obstacle 130a may be located in the through hole 401, and the portion on the Z'-direction side of the flexible portion 110 and the portion on the Z'-direction side of the or each first obstacle 130a may protrude from the through hole 401 in the Z' direction. Alternatively, the support body 122 may be located in the through hole 401, and the entire flexible portion 110 and the entirety of the or each first obstacle 130a may protrude from the through hole 401 in the Z' direction.

Where the plurality of obstacles 130 is provided, the dimension in the Z-Z' direction of the through hole 401 is smaller than the sum of the dimension in the Z-Z' direction of the flexible portion 110 and the dimension in the Z-Z' direction of the support body 122, and smaller than the sum of the dimension in the Z-Z' direction of the flexible portion 110 and the dimension in the Z-Z' direction of the portion on the Z-direction side of each of the obstacles 130. The support body 122, the portion on the Z-direction side of the flexible portion 110, and the portions on the Z-direction side of the obstacles 130 may be located in the through hole 401, and the portion on the Z'-direction side of the flexible portion 110 and the portions on the Z-direction side of the obstacles 130 may protrude from the through hole 401 in the Z' direction. Alternatively, the support body 122 may be located in the through hole 401, and the entire flexible portion 110 and the entirety of the obstacles 130 may protrude from the through hole 401 in the Z' direction.

The support body 122 may include a first portion on the Z-direction side and a second portion on the Z'-direction side. In this case, the flexible portion 110 extends from the second portion in the Z-Z' direction. The second portion includes the peripheral portion 122a. In a cross section in the X-X' direction, the first portion have outer dimensions that are larger than those of the second portion. The through hole 401 includes a first hole on the Z-direction side and a second hole on the Z'-direction side. In a cross section in the X-X' direction, the first hole has dimensions that are larger than the outer dimensions of the first portion of the support body 122. In a cross section in the X-X' direction, the second hole have dimensions that are larger than the outer dimensions of the second portion. The support body 122 may be of substantially uniform outer dimension in cross section in the X-X' direction, from the end in the Z direction to the end in the Z' direction of the support body 122. The through hole 401 may also be of substantially uniform outer dimension in cross section in the X-X' direction, from the end in the Z direction to the end in the Z' direction of the through hole 401.

The adapter 400 includes a connecting portion 410 and a fixing portion 420. The connecting portion 410 extends from the fixing portion 420 in the Z' direction. The connecting portion 410 is connectable to a connection target that forms at least part of a flow channel to flow fluid. For example, the connecting portion 410 may be configured to fit in a connecting hole in the connection target, or may be configured to be screwed into a screw hole in the connection target. In the former case, in a cross section in the X-X' direction, the connecting portion 410 may have an outer shape that corresponds to the shape of the connecting hole of the connection target, and have outer dimensions that are substantially the same as, or slightly larger than, the dimensions of the connecting hole of the connection target. In the latter case, the outer peripheral face of the connecting portion 410 may be formed with a thread groove, and the inner peripheral face of the connecting hole may be formed with a thread groove corresponding to the thread groove of the connecting portion 410. Alternatively, the through hole 401 in the connecting portion 410 may serve as the connecting hole or screw hole for connection with a connection target and may be configured to fittingly or threadingly receive a tubular connecting portion of the connection target.

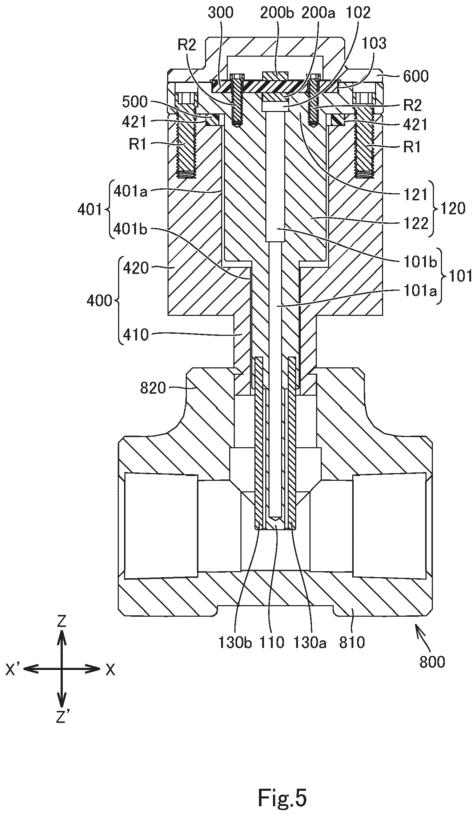

The connection target can be a T-shaped pipe 800 (see Fig. 5), for example. The T-shaped pipe 800 includes a pipe body 810 and a connecting pipe 820. The inside of the pipe body 810 forms a flow channel to flow fluid in the X' direction. The connecting pipe 820 extends in the Z direction from the pipe body 810, and the inside of the connecting pipe 820 forms a hole communicating with the flow channel of the pipe body 810. The hole of the connecting pipe 820 may serve as the connection hole for connection with the connecting portion 410. The connecting hole of the connecting pipe 820 may be configured to fittingly or threadedly receive the connecting portion 410 from the Z-direction side. For convenience of description, a "connection state" will refer to a state in which the T-shaped pipe 800 is connected to the connecting portion 410.

In the connection state, at least part of the flexible portion 110 and at least part of the or each first obstacle 130a protruding from the through hole 401 of the connecting portion 410 may be received in the flow channel of the pipe body 810 through the connecting hole of the connecting pipe 820 without contacting the T-shaped pipe 800. In this case, the at least part of the flexible portion 110 and at least part of the or each first obstacle 130a protruding from the connecting portion 410 pass through the connecting hole of the connecting pipe 820. Where a plurality of obstacles 130 are provided, at least part of the flexible portion 110 and at least part of each of the obstacles 130 protruding from the through hole 401 of the connecting portion 410 may be received in the flow channel of the pipe body 810 through the connecting hole of the connecting pipe 820 without contacting the T-shaped pipe 800. In this case, the at least part of the flexible portion 110 and at least part of each of the obstacles 130 protruding from the connecting portion 410 pass through the connecting hole of the connecting pipe 820. In either case, when fluid flowing through the flow channel collides with one or more first obstacles 130a, the collision generates vortexes in a manner as described above, so that one or more of the vortexes collide with, and thereby distort (flex), the at least part of the flexible portion 110.

Where the adapter 400 and the at least one first obstacle 130a are provided but the second obstacles 130b are not provided, the at least one first obstacle 130a may extend in the Z-Z' direction, not from the support 120, but from the peripheral portion provided on the Z'-direction side of the through hole 401 of the connecting portion 410 of the adapter 400.

Where the adapter 400 and the plurality of obstacles 130 are provided, the obstacles 130 may extend in the Z-Z' direction, not from the support 120, but from the peripheral portion provided on the Z'-direction side of the through hole 401 of the connecting portion 410 of the adapter 400.

The fixing portion 420 may face the base 121 in the Z-Z' direction and be directly fixed to the base 121 with screws R1. Alternatively, the fixing portion 420 may be indirectly fixed to the base 121. For example, the outer peripheral face of the fixing portion 420 extending in the Z-Z' direction may be continuous and flush with the outer peripheral face of the base 121 extending in the Z-Z' direction, these outer peripheral faces may be formed with continuous screw grooves, and bolts (not shown) may be screwed to the outer peripheral faces, so that the fixing portion 420 is indirectly fixed to the base 121 via the bolts.

The sensing device S may further include a seal 500. The seal 500 is an annular member of elastic material, such as rubber. The seal 500 is securely sandwiched in the Z-Z' direction between the base 121 and the adapter 400, with the adapter 400 fixed to the base 121 indirectly or directly. The seal 500 may be, but is not required to be, compressed between the base 121 and the adapter 400. A housing recess 421 for housing the seal 500 may be, but is not required to be, provided along the peripheral edge on the Z-direction side of the through hole 401 of the adapter 400. The seal 500 may be vibration-insulating (elastic) to absorb vibration of the adapter 400. The adapter 400 may or may not be formed with the housing recess 421. The seal 500 may be replaced with a vibration isolating part configured to absorb vibration of the adapter 400.

The sensing device S may further include the cover 600 mentioned above. Where the substrate 300 is provided, the cover 600 is fixed to the base 121 of the support 120 such as to cover the sensor 200b and the substrate 300 from the Z-direction side. Where the substrate 300 is not provided, the cover 600 is fixed to the base 121 of the support 120 such as to cover the sensor 200b from the Z-direction side.

The adapter 400, the seal 500, and/or the cover 600 can be omitted. Where the adapter 400 is omitted, the flexible portion 110 or the support 120 of the sensitive part 100 may be configured to be connectable or fixable to the connection target.

The sensing device S described above provides at least the following technical features and effects.

First, the flexible portion 110 of the sensing device S is easy to get distorted by fluid. This is because the at least one first obstacle 130a is provided on the X-direction side (upstream side) of the flexible portion 110, so that the fluid colliding with the at least one first obstacle 130a generate vortexes (Kármán vortexes) in the fluid alternately on the Y- and Y'-direction sides of the at least one first obstacle 130a. One or more of the vortexes flow in the X' direction and collide with the flexible portion 110 (when the flexible portion 110 is pressed by the fluid vortexes), so that the flexible portion 110 becomes distorted so as to change the air pressure in the internal space 101. As the flexible portion 110 of the sensing device S is thus easy to get distorted so as to easily change the air pressure in the internal space 101, the sensing device S provides an improved sensing accuracy.

Second, where the at least one first obstacle 130a extends in the Z-Z' direction from the peripheral portion 122a of the support 120 of the sensitive part 100, the at least one first obstacle 130a for creates vortexes in fluid is integrated with the sensitive part 100. Accordingly, the sensing device S can be minimized.

Third, the sensing device S has a reduced number of parts. This is because the sensor 200a only requires the at least one microphone for detecting changes in air pressure in the internal space 101 of the sensitive part 100. Further, where the sensor 200a closes the opening 102, the internal space 101 of the sensitive part 100 is sealed by the sensor 200a, so that the sensing device S has a reduced number of parts, compared with the case where the opening 102 is closed by an additional part. Where the substrate 300 closes the opening 102, the internal space 101 of the sensitive part 100 is sealed by the substrate 300, so that the sensing device S has a reduced number of parts, compared with the case where the opening 102 is closed by an additional part.

Fourth, where the sensor 200a is mounted on the substrate 300 and the sensor 200a closes the opening 102 or is placed in the internal space 101 through the opening 102, the sensing device S is easier to assemble for the following reason. Simply by fitting the sensor 200a into the opening 102, or inserting the sensor 200a into the internal space 101 through the opening 102, and fixing the substrate 300 to the support 120, the internal space 101 of the sensitive part 100 is sealed and the fixing of the sensor 200a and the substrate 300 to the support 120 has completed.

Fifth, if the flexible portion 110 is in contact with the adapter 400, such a contacting part would be subjected to load due to the distortion of the flexible portion 110. However, where the flexible portion 110 is not in contact with the adapter 400, the flexible portion 110 will not be subjected to load due to the distortion of the flexible portion 110.

Where the controller 700 and the sensor 200b are provided, the controller 700 is configured to generate the difference data representing differences between the characteristic information of the air pressure in the internal space 101 detected by at least one sensing part of the sensor 200a and the characteristic information of the acoustic vibration around the sensitive part 100 detected by at least one sensing part of the sensor 200b. Using the difference data makes it possible to remove the characteristic information of the acoustic vibration around the sensitive part 100, as a noise, from the characteristic information of the air pressure in the internal space 101. This removal contributes to improved accuracy of the sensing device S for sensing fluid.

The fluid sensing device described above is not limited to the above embodiments, but may be modified in any manner within the scope of the claims. Some examples of specific modification will be described below.

The internal space of the sensitive part of the invention can be omitted. Where the internal space is omitted, the first sensor may be one of the following kinds, for example: a pressure sensor attached to the flexible portion of the sensitive part and configured to sense a drag force generated by the above-described distortion of the flexible portion, an acceleration sensor attached to the flexible portion of the sensitive part and configured to sense the above-described distortion of the flexible portion, a gyro sensor attached to the flexible portion of the sensitive part and configured to sense the above-described distortion of the flexible portion, an optical sensor configured to optically sense the above-described distortion of the flexible portion of the sensitive part.

The first sensor of the invention may be provided as a plurality of first sensors. The plurality of first sensors may border the internal space of any of the aspects or be at least partly located in the internal space, and have at least one sensing part. The at least one sensing part may be configured to detect changes in air pressure in the internal space of any of the aspects. Therefore, the or each sensing part is not limited to a microphone described above, but may be a piezoelectric element or the like device whose voltage (signal) changes in response to changes in air pressure in the internal space of any of the above aspects.

The second sensor of the invention may be may be provided as a plurality of second sensors. The plurality of second sensors may face an area around the sensitive part of any of the aspects and have at least one sensing part. The at least one sensing part is only required to be configured to detect acoustic vibration around the sensitive part of any of the aspects.

### Reference Signs List

S: fluid sensing device
100: sensitive part
   101: internal space
      101a, 101b: first space, second space
   102: opening
   103: housing recess
   104: housing hole
   110: flexible portion
   120: support
      121: base
      122: support body
      123: protrusion
   130: obstacle
200a: sensor (first sensor)
200b: sensor (second sensor)
300: substrate
400: adapter
401: through hole
   410: connecting portion
   420: fixing portion
500: seal
600: cover
700: controller
   710a, 710b: first and second analog-to-digital converters
   720a, 720b: first and second Fourier transformers
   730: computing part
   740: emphasizing part
800: T-shaped pipe
810: pipe body
820: connecting pipe

## Claims

1. A fluid sensing device (S), comprising:
a sensitive part (100) including a flexible portion (110) extending in a second direction (Z-Z') substantially orthogonal to a first direction (X'), the first direction (X') being a flow direction of fluid, at least part of the flexible portion (110) being flexible;
at least one first obstacle (130a) extending in the second direction (Z-Z') and being located in spaced relation to, and on an upstream side (X) of the first direction (X') relative to, the flexible portion (110), the at least one first obstacle (130a) being configured such that a collision of the fluid with the at least one first obstacle (130a) generates vortexes in the fluid alternately on one (Y) and the other (Y') sides in a third direction (Y-Y') relative to the at least one first obstacle (130a), so that one or more of the generated vortexes collide with the flexible portion (110) so as to distort the at least part of the flexible portion (110), the third direction (Y-Y') being substantially orthogonal to the first (X') and second (Z-Z') directions; and
a first sensor (200a) including at least one sensing part configured to detect the distortion of the flexible portion (110) as a flow of the fluid.

2. The fluid sensing device (S) according to claim 1, wherein the at least one first obstacle (130a) comprises a plurality of first obstacles (130a) including at least one set of two first obstacles (130a) that are adjacent to each other in the third direction (Y-Y') with a clearance therebetween, and
the clearance between the two first obstacles (130a) of the or each set is located on the upstream side (X) of the first direction (X') relative to the flexible portion (110).

3. The fluid sensing device (S) according to claim 1 or 2, wherein
the sensitive part (100) includes a sealed internal space (101),
the at least part of the flexible portion (110) is configured to become distorted so as to change an air pressure in the internal space (101), and
the at least one sensing part of the first sensor (200a) borders the internal space (101) or is at least partly located in the internal space (101), and is configured to detect changes in the air pressure in the internal space (101) as a flow of the fluid.

4. The fluid sensing device (S) according to any one of the preceding claims, comprising a plurality of obstacles (130) including the at least one first obstacle (130a),
wherein the obstacles (130) extend in the second direction (Z-Z') and surround the sensitive part (100) at spaced intervals along a circumferential direction of the sensitive part (100).

5. The fluid sensing device (S) according to any one of claims 1 to 3, wherein
the sensitive part (100) further includes a support (120),
the flexible portion (110) of the sensitive part (100) extends from the support (120) in the second direction (Z-Z'), and
the at least one first obstacle (130a) extends from the support (120) in the second direction (Z-Z').

6. The fluid sensing device (S) according to claim 4, wherein
the sensitive part (100) further includes a support (120),
the flexible portion (110) of the sensitive part (100) extends from the support (120) in the second direction (Z-Z'), and
the obstacles (130) extend from the support (120) in the second direction (Z-Z').

7. The fluid sensing device (S) according to claim 5, further comprising an adapter (400), wherein
the adapter (400) is connectable to a connection target (800), the connection target (800) forming at least part of a flow channel for flowing the fluid,
the support (120) includes:
a base (121), and
a support body (122) extending from the base (121) to one side (Z') in the second direction (Z-Z'),
the adapter (400) is fixed directly or indirectly to the base (121) and includes a through hole (401) extending through the adapter (400) in the second direction (Z-Z'), and
the support body (122) is located in the through hole (401) of the adapter (400), and
at least part of the flexible portion (110) and at least part of the at least one first obstacle (130a) protrude from the through hole (401) of the adapter (400) to the one side (Z') in the second direction (Z-Z').

8. The fluid sensing device (S) according to claim 6, further comprising an adapter (400), wherein
the adapter (400) is connectable to a connection target (800), the connection target (800) forming at least part of a flow channel for flowing the fluid,
the support (120) includes:
a base (121), and
a support body (122) extending from the base (121) to one side (Z') in the second direction (Z-Z'),
the adapter (400) is fixed directly or indirectly to the base (121) and includes a through hole (401) extending through the adapter (400) in the second direction (Z-Z'), and
the support body (122) is located in the through hole (401) of the adapter (400), and
at least part of the flexible portion (110) and at least part of the obstacles (130) protrude from the through hole (401) of the adapter (400) to the one side (Z') in the second direction (Z-Z').

9. The fluid sensing device (S) according to claim 7, wherein the flexible portion (110) and the at least one first obstacle (130a) are positioned out of contact with the adapter (400).

10. The fluid sensing device (S) according to claim 8, wherein the flexible portion (110) and the obstacles (130) are positioned out of contact with the adapter (400).

11. The fluid sensing device (S) according to claim 9, wherein
the adapter (400) includes a connecting portion (410) connectable to a connecting pipe (820) of a T-shaped pipe (800), the T-shaped pipe (800) being the connection target, and
the at least part of the flexible portion (110) and the at least part of the at least one first obstacle (130a) are located in the T-shaped pipe (800) without contacting the T-shaped pipe (800) with the connecting portion (410) of the adapter (400) connected to the connecting pipe (820).

12. The fluid sensing device (S) according to claim 10, wherein
the adapter (400) includes a connecting portion (410) connectable to a connecting pipe (820) of a T-shaped pipe (800), the T-shaped pipe (800) being the connection target, and
the at least part of the flexible portion (110) and the at least part of the obstacles (130) are located in the T-shaped pipe (800) without contacting the T-shaped pipe (800) with the connecting portion (410) of the adapter (400) connected to the connecting pipe (820).

13. The fluid sensing device (S) according to claim 3, further comprising:
a second sensor (200b) including at least one sensing part configured to detect acoustic vibration generated around the sensitive part (100); and
a controller (700) configured to generate difference data representing differences between characteristic information of the air pressure detected by the at least one sensing part of the first sensor (200a) and characteristic information of the acoustic vibration detected by the at least one sensing part of the second sensor (200b).

14. The fluid sensing device (S) according to claim 13, wherein the controller (700) includes:
a first Fourier transformer (710a) configured to Fourier transform an electric signal outputted from the at least one sensing part of the first sensor (200a) and thereby generate a first frequency spectrum,
a second Fourier transformer (710b) configured to Fourier transform an electric signal outputted from the at least one sensing part of the second sensor (200b) and thereby generate a second frequency spectrum, and
a computing part (730) configured to obtain differences between the first frequency spectrum and the second frequency spectrum and thereby generate the difference data.

15. The fluid sensing device (S) according to claim 14, wherein
the controller (700) further includes an emphasizing part (740),
the computing part (730) is configured to identify, based on the difference data, a frequency band of fluctuation of the air pressure in the internal space (101), and
the emphasizing part (740) is configured to raise a level of the frequency band of fluctuation of the air pressure in the internal space (101) and lower levels of the other frequency bands in the difference data.
